# EUROPEAN PATENT APPLICATION

(11) **EP 2 535 573 A1**
(43) Date of publication of application: **19.12.2012**
(21) Application number: 10703791.3
(22) Date of filing: 12.02.2010
(51) Int. Cl.: F03D 7/04

(54) **WIND POWER GENERATION DEVICE HANDY TERMINAL, WIND POWER GENERATION DEVICE, AND WIND POWER GENERATION SITE**

(71) Applicant: Mitsubishi Heavy Industries, Ltd., Tokyo 108-8215 (JP)
(72) Inventor: MINAMI, Tohru, Tokyo 108-8215 (JP); IRIE, Eiji, Tokyo 108-8215 (JP)
(74) Representative: Desormiere, Pierre-Louis
(86) International application number: PCT/JP2010/052087
(87) International publication number: WO 2011/099147

(57) **Abstract**

A handy terminal for a wind turbine generator that can prevent management of control logics of control devices for controlling operation of the wind turbine generator from becoming cumbersome. The handy terminal for the wind turbine generator comprises, a connecting portion that connects to a connecting end provided on the wind turbine generator, an operating ends group that generate operation signals to selectively enable control logics included in a control circuit that is incorporated in the wind turbine generator, and a display portion that displays the operating state of the operating ends, wherein the operation signals generated by the operating ends group are operation signals that selectively enables the operating or maintenance control logics of the control circuit of the corresponding wind turbine generator connected via the connecting portion, that are common to the other wind turbine generators in the same site.

## Description

### BACKGROUND OF THE INVENTION

### Field of the Invention

The present invention relates to a handy terminal for a wind turbine generator that selectively switches an operation mode and a maintenance mode of the wind turbine generator to perform predetermined control operations corresponding to each mode, a wind turbine generator and a wind power site. In particular, the invention relates to a handy terminal for a wind turbine generator having a tower provided to stand on land or off-shore, a nacelle supported on the tower to be controlled to rotate in the yaw direction and a plurality of rotatable blades attached to the nacelle to be controlled to move their pitch, whereby the handy terminal is connectable to connecting ends respectively provided on the lower portion of the tower and the nacelle so as to perform various control of the wind turbine generator, and further relates to a wind turbine generator and a wind power site.

### Description of the Related Art

In recent years, from a view point of preserving the global environment, the use of wind turbine generators to generate reusable energy has become popular.
A large-sized wind turbine generator normally comprises a rotor head equipped with blades, a nacelle accommodating a drive train and a generator, and a tower supporting the nacelle. The drive train is for transmitting a torque from the rotor head side to the generator side, and usually includes a gear box so that rotational speed of the rotor head is increased to transmit to the generator. This so-called nacelle type wind turbine generator is popularly used as in wind farms where a plurality of nacelle type wind turbine generators are arranged in predetermined locations in order to secure effective use of wind power and stable power supply to commercial systems.

An example of a technology for maintenance management for a plurality of wind farms is disclosed in Japanese Unexamined Patent Application Publication No. 2009-287453. This technology teaches obtaining information related to running conditions of wind turbine generator systems within each wind farm, via a network that can communicate with each wind turbine generator, but does not teach of separately controlling each wind turbine generator in the wind farm.

Further, Japanese Unexamined Patent Application Publication No. 2002-349413 discloses a technology that enables stable supply of power output that is required by the power generating system as a whole. This technology discloses, for example, a wind turbine generator system comprising a plurality of wind turbine generators wherein each wind turbine generator is provided with a separate control device for controlling the operation thereof, and wherein the control device includes: a measuring means for measuring the operation condition of a local apparatus; a communication means for obtaining operating condition information of other wind turbine generators by exchanging operating condition information with other control devices provided in the other wind turbine generators; an operating pattern determining means for determining an operating pattern for the local apparatus so as to approach a target power output of the entire wind power system based on the operating information of the other wind turbine generators obtained by the communication means; and a control means for controlling the operation of the local apparatus based on the operating pattern determined by the operating determining means.

### Summary of the Invention

However, the above-mentioned prior art disclose technology that enables stable supply of power output of the wind power system as a whole, by obtaining operating condition information of other wind turbine generators, but does not separate the function of each wind turbine generator depending on the location conditions of the wind farm.
Specifically, in a site where a plurality of wind turbine generators are installed in the wind farm, each wind turbine generator has different control settings and is equipped with different equipments depending on the location conditions of the wind turbine generator. For example, among wind turbine generators constructed in a site on a hilly location, limiting conditions on output restriction are varied because wind speeds may vary due to elevation differences, or whether or not a lightning handling device etc. needs to be installed may differ from one wind turbine generator to another. Accordingly, different control logics to correspond to control conditions and equipments etc., are built into the control device S included in each wind turbine generator, and setting parameters unique to each wind turbine generator are inputted into the control logics.

However, to incorporate unique control logics and setting parameters into each control device before shipping is troublesome and time consuming, and leads to cost problems. Further, if any equipment is added or any parts are replaced or repaired during maintenance of the wind turbine generator, it becomes necessary to add or redesign the control logics, and logic management becomes cumbersome and complicated.
The present invention has been devised in view of the above problems of the conventional technology, and it is an object of the present invention to provide a handy terminal for a wind turbine generator that can prevent management of the control logics for operation or maintenance control of the wind turbine generator from becoming cumbersome, and to provide a wind turbine generator and a wind power site.

To solve the above object, the present invention is a handy terminal for a wind turbine generator comprising a connecting portion that connects to a connecting end provided on the wind turbine generator, an operating ends group that generate operation signals to selectively enable control logics included in a control circuit that is incorporated in the wind turbine generator, and a display portion that displays the operating state of the operating ends, wherein
the operation signals generated by the operating ends group are operation signals that selectively enables the operating or maintenance control logics in the control circuit of the corresponding wind turbine generator connected via the connecting portion, that are common to the other wind turbine generators in the same site.

According to the present invention, the wind turbine generator has common control logics with the other wind turbine generators in the same site, the operation signals that selectively enable the control logics are input from the handy terminal to transmit to the control circuit, and operating settings of the control logics are set appropriately for each wind turbine generator. Therefore, management of the control logics of each of the control circuits can be facilitated.
Further, since the operation signals are transmitted by connecting the connecting portion of the handy terminal to the connecting end of the wind turbine generator, when condition setting or setting changes of the control logics need to be carried out during construction or maintenance of the wind turbine generator, it can quickly be done by the operator on site.

The connecting portion of the handy terminal can be directly connected to the connecting end of the wind turbine generator or can be connected via a transmission cable. Since the operation signals are transmitted using the connecting portion, data can be transferred in large capacities, making it possible to transmit operation signals for a plurality of control logics in a short amount of time.
Further, the control logics are logics to control operation or maintenance of the wind turbine generator, and the equipments and functions to be controlled by these control logics can include main components of the wind turbine generator that converts wind power energy to electric power (such as a pitch control system, a yaw control system, or a brake control system). However, it is especially preferable that they are the equipment devices included in the wind turbine generator such as alarm devices and protection devices.

It is preferable that the operation ends group further includes a mode selection end for selecting either a maintenance mode that performs maintenance control or an operating mode that performs operation control of the wind turbine generator, and the mode selection from the mode selection end selectively switches a maintenance mode screen and an operation mode screen on the display portion.
By this structure of selectively switching the maintenance mode screen and the operation mode screen, it is possible to easily input operation signals from the handy terminal according to the work to be carried out, and thus work efficiency will improve.

It is preferable that the operating ends group is a touch panel that is displayed on the displaying portion. This makes it possible to simultaneously display a parameter input screen and an input means such as a numerical keypad on the same screen, and further allows switching operations, thereby making it visually easy to operate.

The wind turbine generators of the present invention are each provided with at least one control circuit that performs operating or maintenance control of the local apparatus, wherein the one control circuit provided in the local apparatus includes a plurality of operating or maintenance control logics that are common with other wind turbine generators, and selectively enables the plurality of control logics by the operation signals obtained from the handy terminal for the wind turbine generator.

According to the present invention, the wind turbine generators have common control logics that are applicable to the other wind turbine generators in the same site. Therefore, it is possible to standardize the structure of the control circuit, which helps to reduce costs.
Further, since each of the control circuits have common control logics and the operation settings of the control circuit is set appropriately for each wind turbine generator by obtaining operation signals of the control logics from the handy terminal, management of the control logics of the individual control devices can be facilitated.

It is preferable that the wind power generators further comprises towers provided to stand on land or off-shore, nacelles supported on the towers to be controlled to rotate in the yaw direction and a plurality of rotatable blades attached to the nacelles to be controlled to move their pitch, wherein
connecting ends are provided on the tower side and the nacelle side respectively, and wherein
the screen for performing the maintenance mode operation is displayed differently on the display portion by connecting the handy terminal to either the nacelle side or the tower side.

For example, when the handy terminal is connected to the nacelle side, a message can be displayed on the maintenance mode screen to alert the operator that erroneous operation after transition to the maintenance mode could potentially be dangerous, or an agreement button wavering the handy terminal's manufacturer of any responsibility caused by erroneous operations could appear on the screen. This will raise safety consciousness as well as improve work efficiency.

Further, it is preferable that the control logics are logics to switch enabling/disabling the functions of an aircraft warning light, a lightning current measuring device, an output restriction, a lightning approaching sensor and a lightning strike counter.
The aircraft warning light, the lightning current measuring device, the output restriction, the lightning approaching sensor and the lightning strike counter need not be equipped to all the wind turbine generators, and even if they are equipped to the wind turbine generators, they do need not to be always enabled. Since the above-described wind turbine generators have control logics common to the other wind turbine generators in the same site including some control logics that are not necessary for its operation, by enabling/disabling the control logics from the handy terminal input, it is possible to appropriately operate only the control logics necessary for operation.

Further, it is preferable that the control logics are logics to perform a curtailment function including a north reference correction value, an angular region and a wind speed condition.
Depending on the wind direction, a wind turbine generator may be in the lee of its adjacent wind turbine generator. In this case, the wind turbine generator receives unbalanced wind load from air current turbulence caused by the adjacent wind turbine generator, which triggers the risk of malfunction or damage to the wind turbine generator. To suppress this risk, if it is determined that one of the adjacent wind turbine generators will receive air current turbulence from its adjacent wind turbine generator, the operation of either one of the adjacent wind turbine generators is shutdown by performing the curtailment function. By this, it is possible to minimize the effect that air current turbulence causes to wind turbine generators.

The wind power site according to the present invention comprises a plurality of wind turbine generators configuring a group of wind turbine generators, wherein
each wind turbine generator is provided with at least one control circuit to perform operating or maintenance control of the local apparatus, and wherein the one control circuit provided in each of the local apparatus includes a plurality of operating or maintenance control logics that are common to other wind turbine generators, and selectively enables the plurality of control logics of each corresponding wind turbine generator by the operation signals that are inputted by connecting the handy terminal claimed in claim 1 to the connecting ends provided on the wind turbine generators.

According to the invention, since the wind power site comprises a plurality of wind turbine generators that are mounted with control circuits having common control logics and handy terminals connectable to these wind turbine generators, by appropriately setting the operation settings of the control logics in the control circuits for each wind turbine generator from the handy terminal to selectively enable the control logics, management of the control logics of each of the control circuits can be facilitated.

It is preferable that, the control logics are logics to perform curtailment control to shutdown the operation of either one of adjacent wind turbine generators to suppress the effect of the other, when one of adjacent wind turbine generators receives air current turbulence from the other wind turbine generator, and wherein the operation signals include an angular range of the wind direction and wind speed conditions for performing the curtailment function.
In this structure, as conditions to perform the curtailment function, operation signals including the angular range of the wind direction and wind speed conditions are inputted through the handy terminal. The angular range is the estimate angle region to receive air current turbulence from the adjacent wind turbine generator, or the estimate angle region to cause air current turbulence to the adjacent wind turbine generator. As for the wind speed condition, since it is unlikely that air current turbulence will occur when the wind speed is low, the curtailment function is performed when the wind speed is higher than a predetermined wind speed.

It is preferable that the control logics are logics to perform calibration of anemometers provided in corresponding wind turbine generators and that the operation signals include calibration values of the anemometers.
In this way, by inputting calibration values of the anemometer as operation signals from the handy terminal and performing calibration of the anemometer based on these operation signals in the control circuit, it is possible to perform operation control of each wind turbine generator with high accuracy.

Further, the wind power site of the present invention comprise a plurality of wind turbine generators, wherein the wind power site is a combination of: a wind power turbine including a control circuit having a plurality of control logics that are common to other wind turbine generators and performs operation control of the local apparatus, and an connecting end for connecting a handy terminal that generates operation signals for enabling the control logic; and a handy terminal including a connecting portion for connecting to the connecting end of the control circuit, an operating ends group into which operation signals to designate operation of the control logic are inputted, a display portion for displaying the operating state of the operating ends on a screen, and a screen display controlling portion for making the display portion display the input screens of the operation signals corresponding to the plurality of control logics.

According to the invention, since the wind power site comprises a plurality of wind turbine generators that are mounted with control circuits having common control logics and handy terminals connectable to these control circuits, by appropriately setting the operation settings of the control logics in the control circuits for each wind turbine generator from the handy terminal to designate operation of the control logics, management of the control logic for each of the wind turbine generator can be facilitated.

According to the present invention, the wind turbine generators have common control logics with the other wind turbine generators in the same site, the operation signals that selectively enables control logics are input from the handy terminal to transmit to the control circuit, and the operation settings of the control logics are set appropriately for each wind turbine generator. Therefore, management of the control logic of each of the control circuits can be facilitated.
Further, since the operation signals are transmitted by connecting the connecting portion of the handy terminal to the connecting end of the wind turbine generator, when condition settings or setting changes of the control logics need to be carried out during construction or maintenance of the wind turbine generator, it can quickly be done by the operator on site.
Moreover, the present invention comprises a plurality of wind turbine generators that are mounted with control circuits having common control logics and handy terminals connectable to these control circuits. By appropriately setting the operation settings of the control logics in the control circuits for each wind turbine generator by inputting operation signals designating operation of the control logics from the handy terminal, management of the control logic of each of the wind turbine generator can be facilitated.

### Brief Description of the Drawings

FIG. 1 is a schematic view showing an example of the overall structure of a wind power site according to an embodiment of the present invention.
FIG. 2 is a block diagram showing structures of a wind turbine generator and a handy terminal according to the present embodiment.
FIG. 3 is a sequence diagram showing processes of the wind turbine generator and the handy terminal.
FIG. 4 is a flow chart showing the operation of the handy terminal.
FIG. 5 is a view showing an example of a startup screen of the handy terminal.
FIG. 6 is a view showing an example of a maintenance mode screen of the handy terminal.
FIG. 7 is a view showing an example of the maintenance mode screen where a numerical keypad is displayed overlappingly.
FIG. 8 is a view showing an example of the structure of a wind turbine generator.
FIG. 9 is a view showing another example of the maintenance mode screen of the handy terminal.
FIG. 10 is a view helpful for explaining a curtailment function.
FIG. 11 is a view showing an example of the maintenance mode screen which displays a screen for setting the curtailment function.
FIG. 12 is a view showing an example of the maintenance mode screen which displays a screen for setting the wind speed calibration.

### Detailed Description of the Preferred Embodiments

A preferred embodiment of the present invention will now be described in detail with reference to the accompanying drawings. It is intended, however, that unless particularly specified, dimensions, materials, shape, its relative positions and the like shall be interpreted as illustrative only and not limitative of the scope of the present.

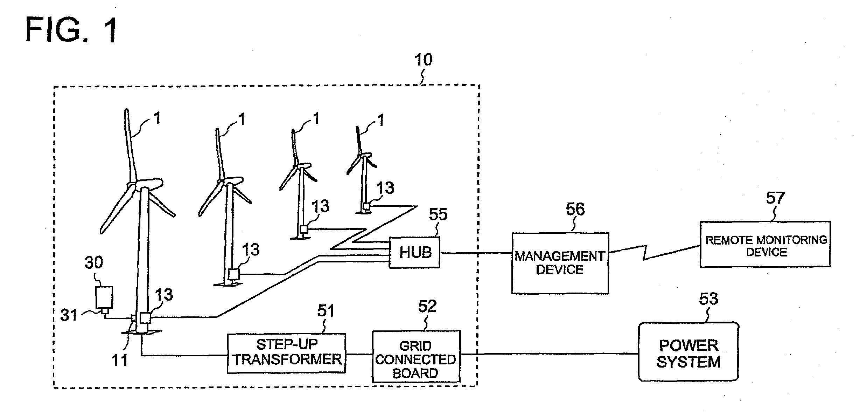

First, with reference to FIG. 1, a description will be given of an example of the overall structure of a wind power site having a plurality of wind turbine generators. A wind power site 10 is comprised of a group of wind turbine generators having a plurality of wind turbine generators 1, whereby these wind turbine generators 1 generate electricity utilizing wind power as energy. Electricity generated by the wind turbine generators 1 is transmitted to a power system 53 via a step-up transformer 51 and a grid connected board 52.

The plurality of wind turbine generators 1 are each equipped with at least one control circuit 13. The control circuit 13 includes a plurality of control logics that are common with the other wind turbine generators in the same site and controls the maintenance or operation of the wind turbine generator 1. The control circuit 13 is also coupled to a connecting end 11 through which various operation signals from a handy terminal 30 are inputted to the control circuit 13.

Further, the wind power site 10 may include a communication management system as described below.
A communication management system that remotely controls and monitors a plurality of the wind turbine generators 1, and includes a management device 56 provided on the site, and a remote monitoring device 57 connected to the management device 56 via a communication line. The management device 56 is connected to a hub 55 via a communication cable while a plurality of control lines extended from the control circuits 13 are connected to the hub 55. Each of the management device 56 and the remote monitoring device 57 comprises a computer including CPU, ROM, RAM, memory and a communication interface, etc., and mainly monitors the operating condition of the wind turbine generators 1.

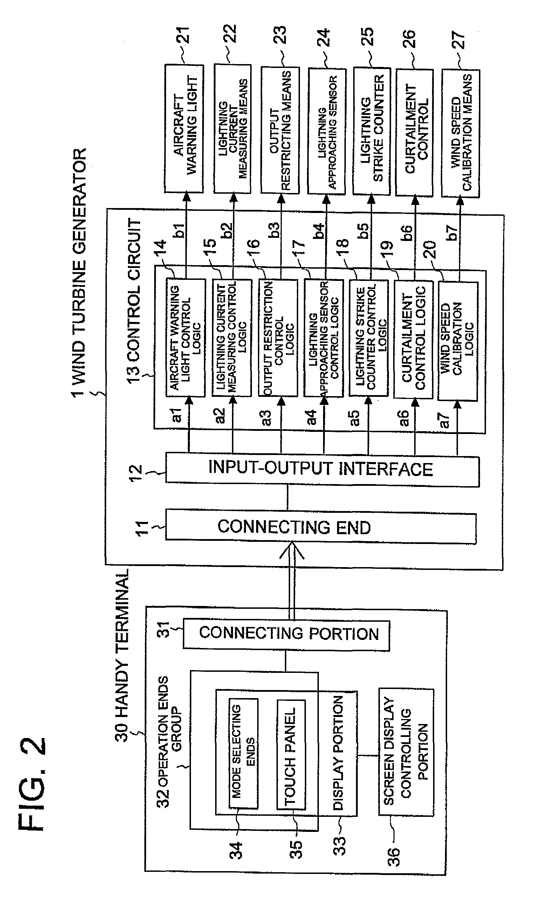

FIG. 2 is a block diagram showing overall structures of a wind turbine generator and a handy terminal according to the present embodiment.
The wind turbine generator 1 mainly includes the connecting end 11, an input-output interface 12, and the control circuit 13 having a plurality of control logics 14-20.
The handy terminal 30 mainly includes a connecting portion 31, an operation ends group 32 and a display portion 33.

The connecting ends 11 of the wind turbine generator 1 and the connecting portion 31 of the handy terminal 30 have a standardized specification among the plurality of the wind turbine generator 1 so that the handy terminal 30 is connectable to any of the wind turbine generators 1.
The connecting portion 31 of the handy terminal 30 may be connected directly to the connecting end 11 of the wind turbine generator 1, or may be connected via a transmission cable. Since data is transmitted from the handy terminal 30 to the wind turbine generator 1 by this connecting method, data can be transferred in large capacities, making it possible to transmit operation signals for a plurality of control logics in a short amount of time.

The structure of the wind turbine generator 1 will now be described.
The control circuit 13 receives operation signals input from the handy terminal 30 via the connecting end 11 or signals detected by various sensors, performs various processes to generate control signals, and transmits these control signals to various devices.
The control circuit 13 is composed of a hardware including CPU, ROM, RAM and memory, etc (not shown). Preferably, the functions of the control logics 14-20 are realized by the hardware. Here, the given example shows how each control logic function 14-20 is realized by using a software, however, needless to say that it may be realized by using hardware logic (logic circuit).

The input-output interface 12 receives signals from the handy terminal 30, various sensors, and various devices, etc., and transfers the signals to each control circuit 13, and transmits the control signals generated by the control circuit 13 to various devices. It should be noted that the input-output interface 12 can be defined to include the connecting end 11.
In the control logics 14-20, operating conditions are set by operation signals a1-a7 that are inputted from the handy terminal 30, then the control logics 14-20 perform various processes under these conditions to generate control signals b1-b7 to transmit to various devices.
The operation signals a1-a7 include a selection signal for selectively enabling the control logics or a numeric signal for setting a condition of the control logic. These operating signals a1-a7 are inputted to the control circuit 13 to set the enabling/disabling of the control logics or numeric conditions are inputted to the control logic, and thereby the control signals b1-b7 are generated by the control logics under the operating conditions.

Specific examples of the control logics are; an aircraft warning light control logic 14 for controlling an operation of an aircraft warning light 21, a lightning current measuring control logic 15 for controlling an operation of a lightning current measuring means 22, an output restriction control logic 16 for controlling an operation of an output restricting means 23, a lightning approaching sensor control logic 17 for controlling an operation of a lightning approaching sensor 24, a lightning strike counter control logic 18 for controlling an operation of a lightning strike counter 25, a curtailment control logic 19 for controlling an operation of a curtailment control means 26, a wind speed calibration logic 20 for controlling an operation of a wind speed calibrating means 27, etc. The means controlled by each control logics will be later described.

The control circuit 13 has a plurality of control logics as described above, but within the wind power site 10 having the plurality of wind turbine generators 1, the combination of the control logics included in one wind turbine generator 1 is common among the other wind turbine generators in the same site.
As such, since the control circuit 13 includes common control logics applicable to the other wind turbine generator 1 in the same site, it is possible to standardize the construction of the control circuit 13, and therefore cost reduction can be achieved.

The structure of the handy terminal 30 will now be described.
The handy terminal 30 selectively switches an operating mode and a maintenance mode so as to perform a predetermined control corresponding to each switched mode.
The display portion 33 displays the operating state of the operating ends, and a liquid crystal display can be used as the display portion.
The operating ends group 32 generates an operation signal for selectively enabling the control logics in the control circuit 13 incorporated in the wind turbine generator 1. The operation signals generated by the operating ends group 32 are operation signals that selectively enable the operating or maintenance control logics of the control circuit 13 of the corresponding wind turbine generator 1 connected via the connecting portion 31, that are common to the other wind turbine generators in the same site. The operating ends group 32 may be a key board provided separately from the display portion 32, however, it is preferable that the operating ends group 32 is a touch panel 35 operable by touching on the screen surface of the display portion 33. Here, the touch panel 35 can employ a common operating method (for example, a resistive layer method).

As such, the wind turbine generator 1 has common control logics with the other wind turbine generators in the same site, the operation signals for selectively enabling control logics are inputted from the handy terminal 30 to transmit to the control circuit 13, and operating settings of the control logics are set appropriately for each wind turbine generator 1. Therefore, management of the control logics for each of the control circuits can be facilitated.
Further, since the operation signals are transmitted by connecting the connecting portion 31 of the handy terminal 30 to the connecting end 11 of the wind turbine generator 1, when condition setting or setting changes of the control logics need to be carried out during construction or maintenance of the wind turbine generator 1, it can quickly be done by the operator on site.

Further, it is preferable that the operating ends group 32 includes a mode selecting end 34 for selecting either a maintenance mode for controlling maintenance or an operating mode for controlling operation of the wind turbine generator 1.
By this structure of selectively switching from the maintenance mode to the operating mode through the mode selecting end 34, it is possible to easily input operation signals corresponding to the work through the handy terminal 30, to thereby improve work efficiency.
Further, the handy terminal 30 is equipped with a screen display control portion 36 for displaying an operation signal input screen for a plurality of control logics on the display portion 33.

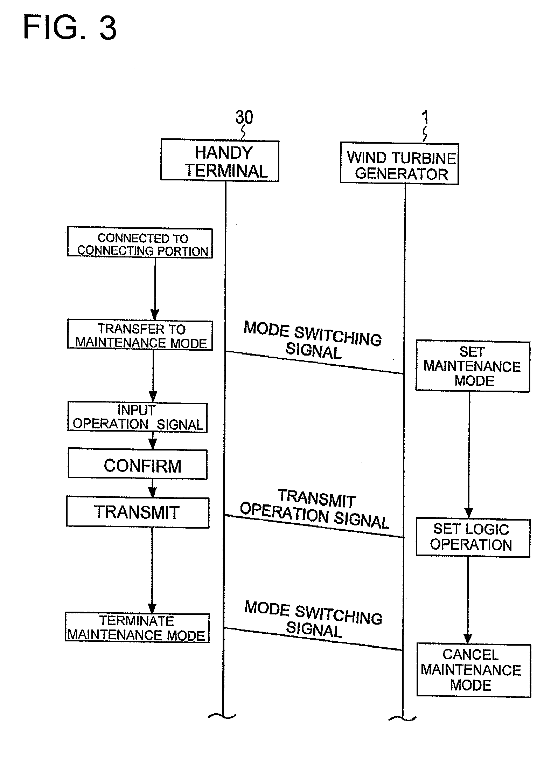

Next, the procedure sequences of the wind turbine generator 1 and the handy terminal 30 will be explained with reference to FIG. 3.
The handy terminal 30 transfers to the maintenance mode when the maintenance mode is selected through the mode selecting ends 34. Upon receiving the maintenance mode switching signal, the wind turbine generator 1 is set to the maintenance mode. When the wind turbine generator 1 is set to the maintenance mode, it accepts the control logics of the condition settings and the setting changes.

When operation signals are inputted through the operation ends group 32, the handy terminal 30 performs a check of the control logics. When input of all the operation signals corresponding to the control logics that need to be set is completed, it is transmitted to the wind turbine generator 1.
The wind turbine generator 1 receives the operation signals from the handy terminal 30 and sets the operation conditions of the control logics in the control circuit 13 based on the operation signals of each control logic. Then, under the set operation conditions, control signals are generated by the control logics by which various means included in the wind turbine generator 1 are controlled.
When the handy terminal 30 is manipulated to terminate the maintenance mode, that mode switching signal is transmitted to the wind turbine generator 1, and the maintenance mode setting in the control circuit 13 is cancelled. After the maintenance mode setting has been cancelled, changing the settings of the control logic in the control circuit 13 becomes prohibited.

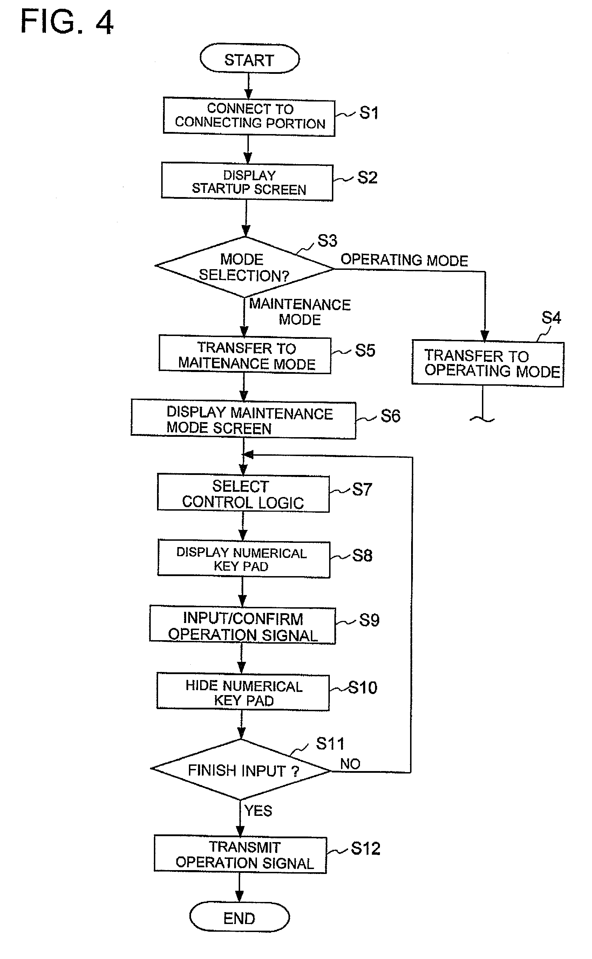

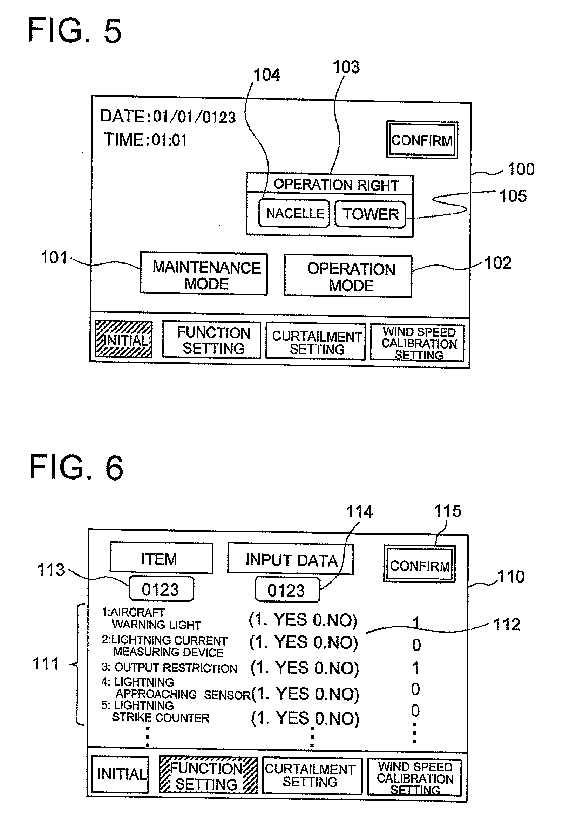

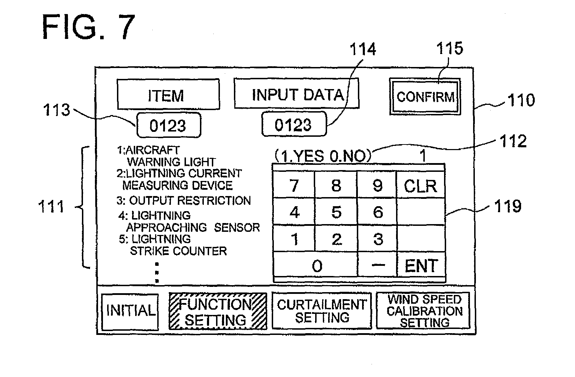

Referring to FIGS. 4 to 7, a specific operation of the handy terminal 30 will be described. FIG. 4 is a flowchart showing an operation of the handy terminal. FIG. 5 is a diagram showing an example of a startup screen, and FIG. 6 is a view showing an example of a maintenance mode screen of the handy terminal. FIG. 7 is a view showing an example of the maintenance mode screen where a numerical keypad is displayed overlappingly.

First, the connecting portion 31 of the handy terminal 30 is connected to the connecting end 11 of the wind turbine generator 1 (S1), then, a startup screen is displayed after an electric source of the handy terminal 30 is turned on (S2). An example of the startup screen is shown in Fig. 5. The startup screen 100 displays a plurality of operation buttons including a maintenance mode button 101 and an operating mode button 102 of the mode selection ends 34. A mode selection is carried out by the mode selection ends 34 (S3). When the operating mode button 102 is pressed, the settings of the handy terminal 30 and the settings of the control circuit 13 transfers to the operating mode (S4). The contents of operating mode will be abbreviated.
On the other hand, if the maintenance mode button 101 is pressed, the settings of the handy terminal 30 and the settings of the control circuit 13 transfers to the maintenance mode (S5).

Further, if the control circuit 13 is provided on both the nacelle side and the tower side, the operating right of the control circuit 13 on the side that the handy terminal 30 is connected to can be selected by an operating right selecting button 103. The selection of the operating right can be done by pressing either a nacelle (side control circuit) button 104 or a tower (side control circuit) button 105. In a preferable configuration, operation signals from the control circuit of the selected side are received but operation signals of the control circuit from the non-selected side are not accepted.

In the maintenance mode, the screen display control portion 36 displays the maintenance mode screen on the display portion 33 (S6). An example of a maintenance mode screen (operation signal input screen) is shown in FIG. 6. The maintenance mode screen 110 displays control logic items 111 corresponding to a plurality of control logics included in the control circuit 13 and setting value options 112, in addition to an operation button 113 for switching to item selecting, an operation button 114 for switching to data inputting and an operation button 115 for transmitting the inputted operation signals to the control circuit 13.

When the operator presses the operation button 113 to switch item selections, as shown in FIG. 7, a numerical key pad 119 is displayed overlapping the maintenance mode screen 110, enabling selection of the control logic items 111 for inputting operation signals. The operator chooses a control logic item number by pressing the numerical key pad 119, then when ENTER is pressed, the numerical key pad screen disappears and the control logic item number that has been selected is displayed at the position of the operation button 113 (S7).

Next, when the operator presses the operation button 114 to switch to data inputting, as shown in FIG. 7, the numeric key pad 119 is displayed overlapping the maintenance mode screen 110 (S8), which allows setting values to be inputted. The operator inputs the setting value corresponding to the selected control logic through the numerical key pad 119 (S9). When ENTER is pressed, the numerical key pad screen disappears (S10), and the inputted setting value is displayed at the position of the operation button 114.
The setting values for all the required control logics are inputted in a similar manner.
When all the setting values have been inputted (S11), by pressing the operation button 115, the operation signals including the setting values of each control logic are transmitted to the wind turbine generator 1 (S12).

Here, the operation signals are selection signals that selectively enable the control logics, and inputting the operation signals switches the enabling/disabling of the control logics. By this structure, any unnecessary control logics in the plurality of control logics in the control circuit 13 can be disabled, and only the necessary control logics will be enabled. Also, it may be structured so that the operation signals are value inputs to set a value in the control logics.

Next, the structure of an example of the wind turbine generator 1 and the control objects that are controlled by the control logics will be described.

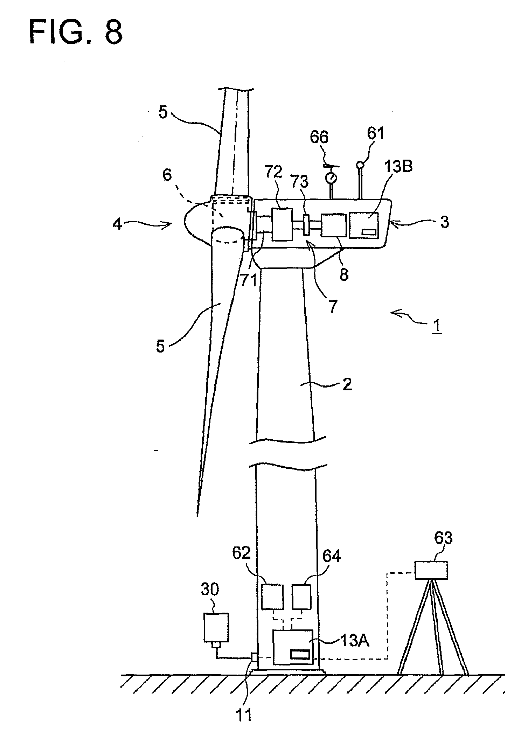

FIG. 8 is a view showing an example of the structure of a wind turbine generator.
A wind turbine generator 1 mainly includes a tower 2 provided to stand on a foundation, a nacelle 3 provided on the upper end of the tower 2, a rotor head 4 provided on the nacelle 3, a plurality of blades 5 attached to the rotor head 4, and a pitch driving system 6 for driving the pitch of the blades 5.

The tower 2 has a column-like shape extending upwardly from the foundation. The tower 2, for example, can be made from a single column-like member or made from a plurality of units aligned in upright direction and coupled to each other. If the tower 2 is made from the plurality of units, the nacelle 3 is provided on the unit located on the top of the tower 2.
The nacelle 3 supports the rotor head 4 and accommodates a drive train 7 and a generator 8, etc.
The drive train 7 includes a main shaft 71 that is connected to a rotor head 4, a gear box 72 connected to the main shaft 71 and a coupling 73 that couples the gear box 71 to the generator 8.

The main shaft 71 is coupled to the rotor head 4 so that it rotates with the blades 5 and the rotor head 4, and is secured to the casing side by a main shaft bearing in a rotatable fashion.
The gear box 72 is arranged between the main shaft 71 and the coupling 73. The gear box 72 increases the rotational speed inputted from the main shaft 71 from the rotor head 4 side and transmits the increased rotational speed to the coupling 73. The gear box 72 may employ, for example, a combination of a planetary gear type speed increasing mechanism and a spur gear type speed increasing mechanism (neither mechanisms are shown), but is not limited to these mechanisms.
The pitch driving system 6 changes the pitch angle of the blades 5 by rotating the blades 5 around an axis (shown in FIG. 8 with dashed lines).

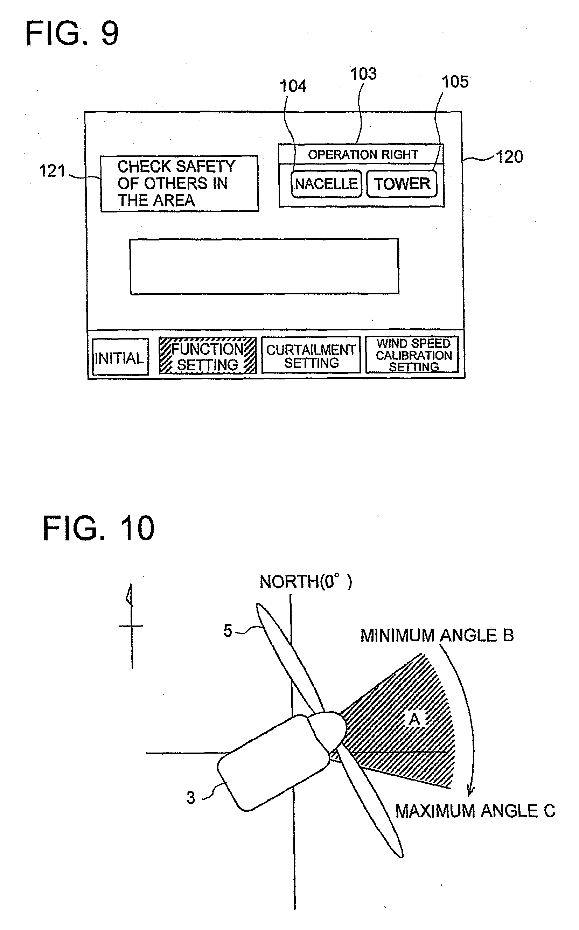

With such a wind turbine generator 1, the connecting end 11 may be arranged on the tower 2 side and on the nacelle 3 side. In this case, it is preferable that the screen on the display portion 33 to perform the maintenance mode operation is displayed differently by connecting the handy terminal 30 to either the nacelle 3 side or to the tower 2 side. For example, as shown in FIG. 9, when the handy terminal 30 is connected to the nacelle 3 side, an alert message 121 can be displayed on the maintenance mode screen to alert the operator that erroneous operation after transition to the maintenance mode could potentially be dangerous, or an agreement button (not shown) wavering the handy terminal's manufacturer of any responsibility caused by erroneous operations could appear on the screen. This will raise safety consciousness as well as improve work efficiency.

The above described wind turbine generator 1 is selectively equipped with the aircraft warning light 61, the lightning current measuring device 62, the lightning approaching sensor 63, the lightning strike counter 64, the output restricting means, the curtailment control means and the wind speed calibration means, and further includes the control circuits 13 (13A, 13B) that controls these equipments and means.
The control circuit 13 includes the tower side control circuit 13A provided on the tower 2 and the nacelle side control circuit 13B accommodated in the nacelle 3. The control circuits 13A and 13B are electrically connected and can be controlled identically. It is preferable that the control circuit 13 has an interlock function so that when condition setting or setting changes to the control logics in the maintenance mode is preformed in either one of the control circuits 13A and 13B, the other control circuit can not transfer to the maintenance mode.

The aircraft warning light 61 is provided on the upper portion of the nacelle 3 to notify the position of the obstacle in an aircraft flight path, and has a light source such as a luminescent diode that is made to flash during the night. When the aircraft warning light control logic 14 included in the control circuit 13 is enabled, lighting etc, of the aircraft warning light 61 is controlled by the control logic 14.

The lightning current measuring device 62 is equipped with a current sensor provided on a surface of the nacelle 2 and a measuring device body that is connected to the current censor, and measures the lightning current on the wind turbine generator 1. When the lightning current measuring control logic 15 included in the control circuit 13 is enabled, the current measurement and data retrieving etc. of the lightning current measuring means 62 is controlled by the control logic 15.

The lightning approaching sensor 63 can be provided, for example, near the wind turbine generator 1 for receiving magnetic fields and light from lightning strokes, and transmits lightning alerts. When the lightning approaching sensor control logic 17 included in the control circuit 13 is enabled, sensor detection and data transmission etc. of the lightning approaching sensor 63 is controlled by the control logic 17.

The lightning strike counter 64 is provided on the tower 2 of the wind turbine generator 1, and for example, when the current value measured by the lightning current measuring means 62 is above a predetermined threshold value, it will count the number of times exceeds the threshold and will output an alert as necessary. When the logic control 18 included in the control circuit 13 is enabled, a counter function of the lightning strike counter 64 is performed by the lightning strike counter control logic 18.

The output restricting means performs output restriction of the wind turbine generator 1 based on a preset wind speed - power characteristic, by lowering the power of the wind turbine below a rated power by adjusting the rotor pitch through the pitch driving system 6, when the wind speed of the area around the wind turbine generator exceeds a predetermined wind speed. The output restricting means of the present invention will perform output restriction by the output restricting control logic 16 when the logic control 16 of the circuit 13 is enabled.

The curtailment control means shuts down the operation of either one of adjacent wind turbine generators 1 when one wind turbine generator 1 receives air flow turbulence from the adjacent other wind turbine generator 1 to thereby suppress the effect of the turbulence.
The curtailment control means includes a braking means to shut down the wind turbine generator 1 and an aerovane 66 that measures the wind direction and wind speed around the wind turbine generator 1. The braking means can be, for example, the pitch drive system 6 or a braking device that is provided on a coupling 73 (figure abbreviated). When using the pitch drive system 6 as the braking means, the wind turbine generator 1 can be shut down by transferring the blades 5 into a feathering state.

The curtailment control logic 19 shuts down the operation of the wind turbine generator by controlling the braking means if the wind direction measured by the aerovane 66 is within a preset angular range and the wind speed measured exceeds a preset wind speed.
A specific braking method according to the curtailment control logic 19 will be now described.

First, the angular range of the wind direction to perform the curtailment function is set. This angular range is set using the absolute azimuth direction. For example, as shown in FIG. 10, if the nacelle 3 faces the field range indicated as A in the figure, it is assumed that it receives air current turbulence from an adjacent wind turbine generator 1, or that it causes air current turbulence to the adjacent turbine generator 1. In this situation, if north is the reference azimuth direction at 0 degrees, the angular range to perform the curtailment function is set between the minimum angle B to the maximum angle C.
Further, since the wind turbine generator 1 receives little effect from its adjacent wind turbine generator if the wind speed is low, a set wind speed and a reset wind speed is set so that the curtailment function is performed if the wind speed is above the set wind speed, and the curtailment function is terminated if the wind speed is below the reset wind speed.

The curtailment control means having the above structure is controlled by the control logics having conditions set by the operation signals inputted from the handy terminal 30.

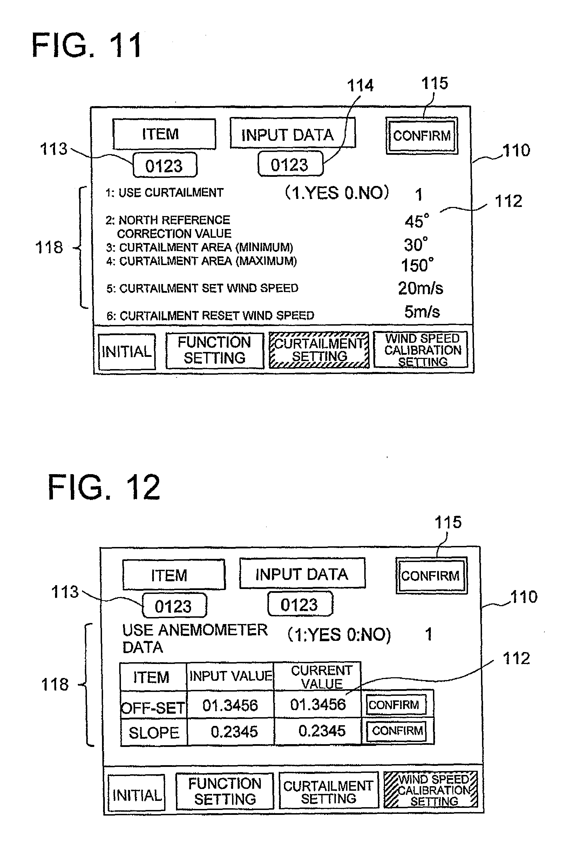

FIG. 11 is a view showing an example of the maintenance mode screen (operation signal input screen) and is a setting screen for the curtailment function. The maintenance mode screen 110 displays items for inputting a curtailment usage/non-usage selection, a north reference correction value, a curtailment range (minimum), a curtailment range (maximum), a set wind speed and a reset wind speed. Here, the north reference correction value is a correction value to calculate the absolute azimuth direction using north as the reference angle.

When the operator presses the operation button 113 to switch the item selection, the numerical key pad 119 is displayed overlapping the maintenance mode screen 110 (refer to FIG. 7), enabling selection of the items 118 for inputting operation signals. When the operator selects the item number from the numerical key pad 119 then presses ENTER, the numerical key pad screen disappears and the selected item number is displayed at the position of the operation button 113.
Next, when the operator presses the operation button 114 to switch to data inputting, the numerical key pad 119 is displayed overlapping the maintenance mode screen 110, which allows operation signals to be inputted. When the operator inputs the operation signal corresponding to the selected item number from the numerical key pad 119 then presses ENTER, the numerical key pad screen disappears and the inputted operation signal is displayed at the position of the operation button 114.

By these operations, the curtailment usage/non-usage is selected, the north reference correction value is inputted, the curtailment range (minimum) is inputted, curtailment range (maximum) is inputted, the set wind speed is inputted and the reset wind speed is inputted.
After operation signals for all items have been inputted, by pressing the operation button 115, operation signals relating to the curtailment function are transmitted to the control circuit 13.

In this way, when it is determined that either one of adjacent wind turbine generators 1 will receive air flow turbulence from the adjacent other wind turbine generator 1, the curtailment control means shuts down the operation of either one of the adjacent wind turbine generators 1 to suppress the effect of the turbulence. Thus it is possible to minimize the effect that air current turbulence causes to wind turbine generators. Further, since curtailment functions differ among the wind turbine generators 1, based on their position in relation to adjacent wind turbine generators and location situation etc, by inputting operations signals individually to each device from the handy terminal 30 makes it possible to easily and appropriately set condition settings to the control circuits 13 of each of the wind turbine generators 1.

The wind speed calibration means calibrates the wind speed measured by the aerovane 66 by inputting the calibrated data measured by each anemometer of the calibration system to the wind speed calibration control logic.
In the present embodiment, the wind speed calibration system inputs setting for usage and non-usage and the condition setting if used, from the handy terminal 30.
FIG. 12 is a view showing an example of the maintenance mode screen (operation signal input screen), and is a setting screen for wind speed calibration. The maintenance mode screen 110 displays an item 118 for selecting the usage/non-usage of the anemometer data, and for inputting the calibration data (off-set value, slope value).

Similar to the setting of the curtailment function, in the setting screen for wind speed calibration, an operation signal is inputted for each item number and is transmitted to the wind turbine generator 1. In this way, by inputting calibration values of the anemometer as operation signals from the handy terminal 30, and performing calibration of the anemometer based on these operation signals in the control circuit 13, it is possible to carry out operation control of each wind turbine generator 1 with high accuracy.

## Claims

1. A handy terminal for a wind turbine generator comprising a connecting portion that connects to a connecting end provided on the wind turbine generator, an operating ends group that generate operation signals to selectively enable control logics included in a control circuit that is incorporated in the wind turbine generator, and a display portion that displays the operating state of the operating ends, wherein
the operation signals generated by the operating ends group are operation signals that selectively enables the operating or maintenance control logics in the control circuit of the corresponding wind turbine generator connected via the connecting portion, that are common to the other wind turbine generators in the same site.

2. A handy terminal for a wind turbine generator according to claim 1, wherein
the operation ends group further includes a mode selection end for selecting either a maintenance mode that performs maintenance control or an operating mode that performs operation control of the wind turbine generator, and
the mode selection from the mode selection end selectively switches a maintenance mode screen and an operation mode screen on the display portion.

3. A handy terminal for a wind turbine generator according to claim 1, wherein the operating ends group is a touch panel that is displayed on the displaying portion.

4. Wind turbine generators each provided with at least one control circuit that performs operating or maintenance control of the local apparatus, wherein
the one control circuit provided in the local apparatus includes a plurality of operating or maintenance control logics that are common with other wind turbine generators, and selectively enables the plurality of control logics by the operation signals obtained from the handy terminal for the wind turbine generator as claimed in claim 1.

5. Wind power generators according to claim 4, further comprising towers provided to stand on land or off-shore, nacelles supported on the towers to be controlled to rotate in the yaw direction and a plurality of rotatable blades attached to the nacelles to be controlled to move their pitch, wherein
the connecting ends are provided on the tower side and the nacelle side respectively, and wherein
the screen for performing the maintenance mode operation is displayed differently on the display portion by connecting the handy terminal to either the nacelle side or the tower side.

6. Wind turbine generators according to claim 4, wherein the control logics are logics to switch enabling/disabling the functions of an aircraft warning light, a lightning current measuring device, an output restriction, a lightning approaching sensor and a lightning strike counter.

7. Wind turbine generators according to claim 4, wherein the control logics are logics to perform a curtailment function including a north reference correction value, an angular range and a wind speed condition.

8. A wind power site comprising a plurality of wind turbine generators that configures a group of wind turbine generators, wherein
each wind turbine generator is provided with at least one control circuit to perform operating or maintenance control of the local apparatus, and wherein
the one control circuit provided in each of the local apparatus includes a plurality of operating or maintenance control logics that are common to other wind turbine generators, and selectively enables the plurality of control logics of each corresponding wind turbine generator by the operation signals that are inputted by connecting the handy terminal claimed in claim 1 to the connecting ends provided on the wind turbine generators.

9. A wind power site according to claim 8 wherein the control logics are logics to perform curtailment control to shutdown the operation of either one of adjacent wind turbine generators to suppress the effect of the other, when one of adjacent wind turbine generators receives air current turbulence from the other wind turbine generator, and wherein
the operation signals include an angular range of the wind direction and wind speed conditions for performing the curtailment function.

10. A wind power site according to claim 8, wherein
the control logics are logics to perform calibration of anemometers provided in corresponding wind turbine generators, and
the operation signals include calibration values of the anemometers.

11. A wind power site comprising a plurality of wind turbine generators, wherein the wind power site is a combination of:
a wind power turbine including a control circuit having a plurality of control logics that are common to other wind turbine generators and performs operation control of the local apparatus, and an connecting end for connecting a handy terminal that generates operation signals for enabling the control logic; and
a handy terminal including a connecting portion for connecting to the connecting end of the control circuit, an operating ends group into which operation signals to designate operation of the control logic are inputted, a display portion for displaying the operating state of the operating ends on a screen, and a screen display controlling portion for making the display portion display input screens of operation signals corresponding to the plurality of control logics.
